# EUROPEAN PATENT SPECIFICATION

(11) **EP 2 863 661 B1**
(45) Date of publication and mention of the grant of the patent: **10.10.2018**
(21) Application number: 12879847.7
(22) Date of filing: 30.06.2012
(51) Int. Cl.: H04W 4/24, H04M 15/00, H04L 12/14

(54) **METHOD AND GATEWAY FOR GATEWAY BILLING**
VERFAHREN UND GATEWAY FÜR GATEWAY-ABRECHNUNG
PROCÉDÉ ET PASSERELLE DE FACTURATION DE PASSERELLE

(43) Date of publication of application: 22.04.2015
(60) Divisional application: 18192479.6
(73) Proprietor: Huawei Technologies Co., Ltd., Longgang District Shenzhen, Guangdong 518129 (CN)
(72) Inventor: CAI, Hui, Shenzhen Guangdong 518129 (CN); TAN, Shiyong, Shenzhen Guangdong 518129 (CN); NI, Hui, Shenzhen Guangdong 518129 (CN)
(74) Representative: Gill Jennings & Every LLP
(86) International application number: PCT/CN2012/077992
(87) International publication number: WO 2014/000301

(56) References cited:
- EP-A1- 2 466 932
- WO-A1-2011/085543
- CN-A- 101 166 109
- CN-A- 101 998 348
- CN-C- 100 544 266
- US-A1- 2009 264 097
- US-A1- 2011 314 536

## Description

### TECHNICAL FIELD

The present invention relates to the field of communications, and in particular, to a gateway charging method and a gateway.

### BACKGROUND

With the development of mobile Internet services, the enrichment of enterprise network services, and the convergence of mobile access networks of a variety of standards, a gateway is required to develop towards a direction of more refined service control and charging on the basis of completion of basic data forwarding functions, so as to support implementation and control of richer services of an operator.

However, in the development of a gateway towards the direction of more refined service control and charging, because adopted platforms are different, the development has different focuses. A general purpose computing platform is more suitable for processing control signaling of mobility management, session management and so on, so the development focuses on control processing of services; while a router platform formed of dedicated hardware has very strong performance in handling data forwarding on a user plane, which is generally more than ten times the capability of a general purpose computing platform, but this type of platform has weak performance in processing signaling. Therefore, in the prior art, if the development of a gateway focuses on improving a user data forwarding throughput, it is difficult to ensure the development towards the direction of more refined service control and charging; on the contrary, if the development of a gateway focuses on the development towards the direction of more refined service control and charging, it is difficult to ensure the improvement of the user data forwarding throughput. Therefore, there is a bottleneck in the development of gateway charging.

EP 2466932 A1 describes an approach to charging which is arranged between the MME and a gateway.

WO 2011/085543 A1 describes the use of trigger events in charging.

US 2009/0264097 A1 describes approaches to charging in LTE.

CN 100544266 C describes an approach to resource allocation using charging policy.

### SUMMARY

Embodiments of the present invention provide a gateway charging method and a gateway, which can lower information transmission amount between two sub-gateways obtained by dividing the gateway.

In order to achieve the foregoing objectives, embodiments of the present invention adopt the following technical solutions:
In a first aspect, there is provided a gateway charging method, wherein a gateway is divided into a first sub-gateway and a second sub-gateway, the first sub-gateway is configured to process a charging policy and control the second sub-gateway, and the second sub-gateway is configured to forward data and collect charging information, and the method comprises:
receiving, by the second sub-gateway, a first message sent by the first sub-gateway, wherein the first message is an identifier corresponding to a charging policy of an access user in a first preset charging policy, and the first preset charging policy is set in the first sub-gateway;
searching, by the second sub-gateway, a second preset charging policy for the charging policy according to the identifier, and collecting the charging information of the access user according to the second preset charging policy, wherein the second preset charging policy is set in the second sub-gateway, the charging policy in the first preset charging policy and the charging policy in the second preset charging policy correspond to the same identifier; and
sending, by the second sub-gateway, a second message to the first sub-gateway, wherein the second message carries the charging information.

In a second aspect, there is provided a gateway charging method, wherein a gateway is divided into a first sub-gateway and a second sub-gateway, the first sub-gateway is configured to process a charging policy and control the second sub-gateway, and the second sub-gateway is configured to forward data and collect charging information, and the method comprises:
determining, by the first sub-gateway, a charging policy of an access user according to gateway configuration or information of the access user;
sending, by the first sub-gateway, a first message to the second sub-gateway, wherein the first message is an identifier corresponding to the charging policy in a first preset charging policy, and the first preset charging policy is set in the first sub-gateway; and
receiving, by the first sub-gateway, a second message sent by the second sub-gateway, wherein the second message carries the charging information, the charging information being collected according to a second preset charging policy set in the second sub-gateway, the charging policy in the first preset charging policy and the charging policy in the second preset charging policy corresponding to the same identifier.

In a third aspect, there is provided a gateway, wherein the gateway is divided into a first sub-gateway and a second sub-gateway, the first sub-gateway is configured to process a charging policy and control the second sub-gateway, the second sub-gateway is configured to forward data and collect charging information, and the second sub-gateway comprises:
a second receiving unit, configured to receive the first message sent by the first sub-gateway, wherein the first message is an identifier corresponding to the charging policy in a first preset charging policy, and the first preset charging policy is set in the first sub-gateway;
a second processing unit, configured to search a second preset charging policy for the charging policy according to the identifier received by the second receiving unit, and collect the charging information of the access user according to the second preset charging policy, wherein the second preset charging policy is set in the second sub-gateway, and the charging policy in the first preset charging policy and the charging policy in the second preset charging policy correspond to the same identifier; and
a second sending unit, configured to send a second message to the first sub-gateway, wherein the second message carries the charging information collected by the second processing unit.

In a fourth aspect, there is provided a gateway, wherein the gateway is divided into a first sub-gateway and a second sub-gateway, the first sub-gateway is configured to process a charging policy and control the second sub-gateway, the second sub-gateway is configured to forward data and collect charging information, and the first sub-gateway comprises:
a first processing unit, configured to determine a charging policy of an access user according to gateway configuration or information of the access user;
a first sending unit, configured to send a first message to the second sub-gateway, wherein the first message is an identifier corresponding to the charging policy in a first preset charging policy, and the first preset charging policy is set in the first sub-gateway; and
a first receiving unit, configured to receive a second message sent by the second sub-gateway, wherein the second message carries the charging information, the charging information being collected according to a second preset charging policy set in the second sub-gateway, the charging policy in the first preset charging policy and the charging policy in the second preset charging policy corresponding to the same identifier.

According to the gateway charging method and the gateway provided by the embodiments of the present invention, the first sub-gateway determines a charging policy of an access user, and sends a first message indicating the charging policy to the second sub-gateway; the second sub-gateway receives the first message, and then collects charging information according to the first message, and sends a second message carrying the charging information to the first sub-gateway; and the first sub-gateway receives the second message. In this way, the first sub-gateway can merely process the charging information and control the second sub-gateway, while the second sub-gateway can merely measure data and send a measurement result. Messages indicating required charging information and carrying the collected charging information are sent between the first sub-gateway and the second sub-gateway, so that multiple contents such as charging condition information and charging control information does not need to be transferred, thereby lowering transmission amount of charging information between two sub-gateway interfaces.

### BRIEF DESCRIPTION OF DRAWINGS

To illustrate the technical solutions according to the embodiments of the present invention or in the prior art more clearly, accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a schematic flow chart of a second gateway charging method according to an embodiment of the present invention;
FIG. 2 is a schematic flow chart of a first sub-gateway charging method according to an embodiment of the present invention;
FIG. 3 is a schematic flow chart of a gateway charging method according to another embodiment of the present invention;
FIG. 4 is a schematic flow chart of a gateway charging method according to another embodiment of the present invention;
FIG. 5 is a schematic structural diagram of a gateway according to an embodiment of the present invention;
FIG. 6 is a schematic structural diagram of a second sub-gateway according to an embodiment of the present invention;
FIG. 7 is a schematic structural diagram of a first sub-gateway according to an embodiment of the present invention; and
FIG. 8 is a schematic structural diagram of a first sub-gateway according to an embodiment of the present invention.

### DESCRIPTION OF EMBODIMENTS

The technical solutions in the embodiments of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

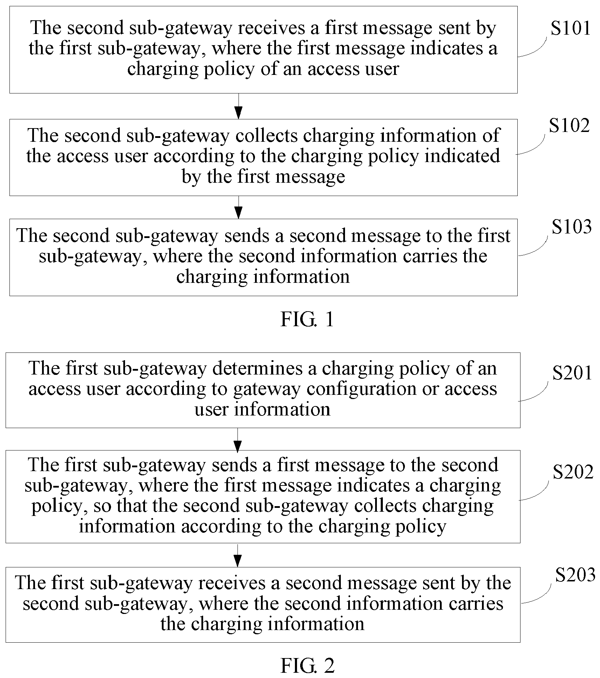

According to a gateway charging method provided by an embodiment of the present invention, a gateway is divided into a first sub-gateway and a second sub-gateway, the first sub-gateway is configured to process a charging policy and control the second sub-gateway, and the second sub-gateway is configured to forward data. As shown in FIG. 1, the method is a method for a second sub-gateway side, and the method includes:
S101: The second sub-gateway receives a first message sent by the first sub-gateway, where the first message indicates a charging policy of an access user.

It should be noted that, in a 3GPP (The 3rd Generation Partnership Project, the 3rd generation partnership project) system, when maintaining a control plane service and a data forwarding service, the two sub-gateways need to transfer, to each other, a large amount of charging condition information, such as QoS (Quality of Service, quality of service), and charging control information, such as related content information such as reporting threshold and envelope, thereby increasing charging information content transferred between the two sub-gateway interfaces after the gateway is decoupled, and increasing a load of charging function processing in the gateway.

For example, dividing the gateway into the first sub-gateway and the second sub-gateway may be dividing a UGW (Unified Gateway, unified gateway) into a forwarding plane and a control plane, for example, splitting the UGW's functionalities into two parts, that is, a UGW-C (Unified Gateway Control plane, unified gateway control plane) and a UGW-U (Unified Gateway User plane, unified gateway user plane), where the first sub-gateway may be the UGW-C, and the second gateway may be the UGW-U. The UGW-C is mainly to complete user access, policy control and charging CDR management, and the UGW-U is mainly in charge of forwarding data and executing a control and charging policy delivered by the control plane.

Further, the first message may be an identifier, for example, an identifier indicating a corresponding charging policy of an access user in a preset charging policy, where the preset charging policy may be mutually agreed by the first sub-gateway and the second sub-gateway, a same identifier corresponds to a same charging policy list, for example, a first preset charging policy is set in the first sub-gateway, and a second preset sub-gateway is set in the second sub-gateway, where a first preset policy and a second preset policy merely need to set a same identifier corresponding to a same charging policy, and are not required to be the same. For example, the first preset charging policy may have several preset policies more than the second preset charging policy, or the charging policy sequence in the first preset charging policy is not the same as that in the second preset charging policy. In this embodiment, merely a situation that the first preset charging policy and the second preset charging policy are the same is taken as an example, which, however, does not serve as a limitation. The first preset charging policy and the second preset charging policy are shown in Table 1.

**Table 1**

| Charging Policy | Identifier |
|---|---|
| Call duration under roaming charging | 1100 |
| Traffic volume under traffic-based charging | 1101 |
| Call duration of free incoming calls | 1010 |

If the first message indicates call duration under roaming charging, the first message may be an identifier 1101, so when the first message received by second sub-gateway and sent by the first sub-gateway is 1101, the second sub-gateway can know that charging information of the call duration under roaming charging needs to be measured. In addition, the identifier may also be a name, for example, "call duration under roaming charging" or another value or other information signs, and is not limited to examples listed in Table 1. Further, the identifier may also be a context identifier or an entry identifier, so that the second sub-gateway can search context or entries by using the identifier as an index, so as to measure charging information needing to be collected.

Optionally, the first message may further be an entry including a charging policy, for example, the first message may be

| |
|---|
| Call duration under roaming charging |

It should be noted that, only an entry is taken as an example herein, but the present invention is not limited to the item of the entry.

Further, an access user corresponding to the identifier or the entry can be determined according to a matching value in the identifier or the entry, so the entry may not indicate the access user, but the second sub-gateway and the first sub-gateway determine the access user according to the matching value, so as to know that the indicated charging policy and the measured and responded charging information are for the same access user.

S102: The second sub-gateway collects charging information of the access user according to the charging policy indicated by the first message.

It should be noted that, if the first message received by the second sub-gateway is an identifier, the second sub-gateway determines, according to a second preset charging policy that is preset by the second sub-gateway and the first sub-gateway, a charging policy that needs to be measured, so as to collect the charging information; or, the second sub-gateway searches known context or entry collection charging policies in the first sub-gateway and the second sub-gateway by using the identifier as an index, so as to execute the charging policy and collect the charging information; and if the first message received by the second sub-gateway is an entry, the second sub-gateway collects the charging information according to the charging policy in the entry.

Further, if the first message is an entry, and a charging policy in the entry is no-charging or the entry is just empty, the second sub-gateway determines to execute a charging policy of no-charging.

S103: The second sub-gateway sends a second message to the first sub-gateway, where the second information carries the charging information.

It should be noted that, the second message feeds back the collected charging information to the first sub-gateway, so that the first sub-gateway finds the charging policy according to the charging information and a matching value of the charging information, and when a user or another external device requests, the first sub-gateway generates a CDR according to the charging policy, and feeds back the CDR to the user or the external device.

According to a gateway charging method provided by an embodiment of the present invention, a gateway is divided into a first sub-gateway and a second sub-gateway, the first sub-gateway is configured to process a charging policy and control the second sub-gateway, and the second sub-gateway is configured to forward data. As shown in FIG. 2, the method is a method for a first sub-gateway side, and the method includes:
S201: The first sub-gateway determines a charging policy of an access user according to gateway configuration or information of the access user.

It should be noted that, the first sub-gateway is a UGW-C. The UGW-C determines a charging policy of an access user that needs to be measured, according to the gateway configuration, that is, according to a charging policy corresponding to a user, a bearer and a service that is statically configured on a gateway; or when a user and a service are activated, the UGW-C obtains information of the access user in real time and determines a charging policy of an access user that needs to be measured.

S202: The first sub-gateway sends a first message to the second sub-gateway, where the first message indicates a charging policy, so that the second sub-gateway collects charging information according to the charging policy.

It should be noted that, the first message may be an identifier corresponding to an access user in a first preset charging policy, for example, the identifier may be an identifier of a corresponding charging policy in a preset charging policy list, so that the second sub-gateway queries a second preset charging policy according to the identifier, so as to collect a charging policy; the first message may also be an identifier of a corresponding charging policy in a context or an identifier of a corresponding charging policy in an entry; in addition, the first message may also be an entry, for example, an entry including a charging policy. It should be noted that, because the first message sent by the first sub-gateway to the second sub-gateway is the same as the first message received by the second sub-gateway, the method for collecting a charging policy according to the first message has been described in the foregoing embodiment, so details are not described herein again.

S203: The first sub-gateway receives a second message sent by the second sub-gateway, where the second information carries the charging information.

According to the gateway charging method provided by the embodiment of the present invention, the first sub-gateway determines a charging policy of an access user, and sends a first message indicating the charging policy to the second sub-gateway; the second sub-gateway receives the first message, and then collects charging information according to the first message, and sends a second message carrying the charging information to the first sub-gateway; and the first sub-gateway receives the second message. In this way, the first sub-gateway can merely process the charging information and control the second sub-gateway, while the second sub-gateway can merely measure data and send a measurement result. Messages indicating required charging information and carrying the collected charging information are sent between the first sub-gateway and the second sub-gateway, so that multiple contents such as charging condition information and charging control information does not need to be transferred, thereby lowering transmission amount of charging information between two sub-gateway interfaces.

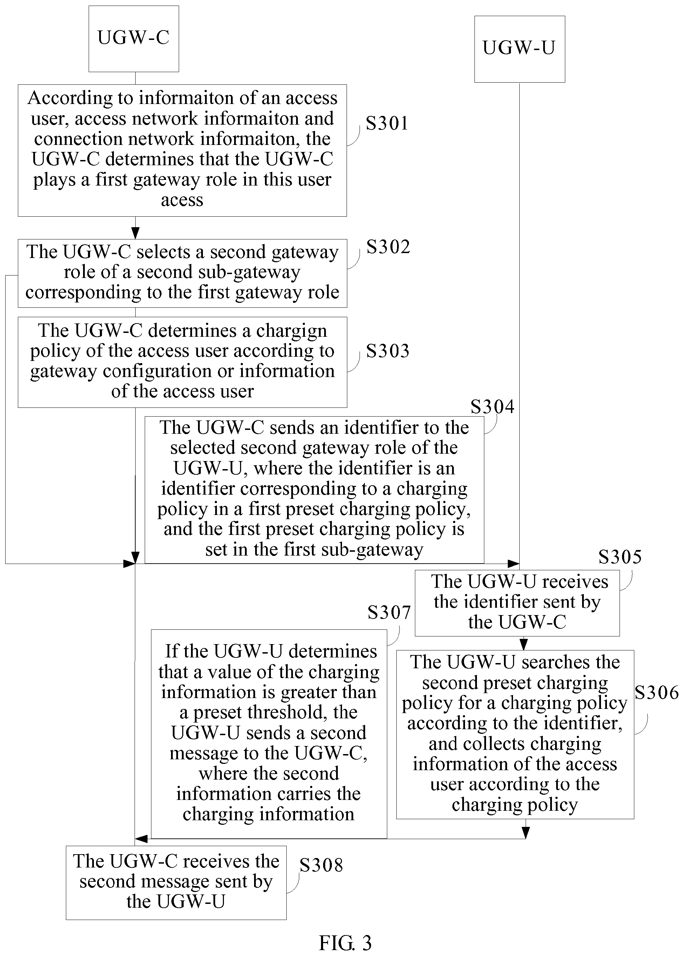

According to a gateway charging method provided by another embodiment of the present invention, as shown in FIG. 3, in this embodiment, a situation that a gateway is a UGW, a first sub-gateway is a UGW-C, and a second sub-gateway is a UGW-U is taken as an example, which, however, does not serve as a limitation. The method includes:
S301: According to user information of an access user, access network information and connection network information, the UGW-C determines that the UGW-C plays a first gateway role in this time of user access.

It should be noted that, the user information of the access user includes that a user is in a roaming state or that a user is in a local non-roaming state; the connection network information includes LBO (Local Break Out, local break out) or Home-routed attribution routing, where the LBO refers to that an access user is in a roaming area and data traffic comes out from the roaming area; while the Home-routed refers to that an access user is in a roaming area and data traffic returns back to the home location from the roaming area and then comes out from the home location. The role that the UGW-C plays in this time of user access may be a GGSN (Gateway GPRS Support Node, gateway general packet radio service support node), an SGW (Serving Gateway, serving gateway), a PGW (Packet Data Network Gateway, packet data network gateway) or an SGW+PGW (Packet Data Network Gateway+ Packet Data Network Gateway, serve as a serving gateway and a packet data network gateway).

S302: The UGW-C selects a second gateway role of a second sub-gateway corresponding to the first gateway role.

For example, according to that the first gateway role that the UGW-C plays in this time of user access, the UGW-U selects a corresponding second gateway role. If the first gateway role of the UGW-C is an SGW this time, after being connected to a PGW through an interface, a second role of the UGW-U is selected to be an SGW. Alternatively, when the first role of the UGW-C is a GGSN or an SGW+PGW, a second role of the UGW-U is selected to be a GGSN, a PGW or an SGW+PGW.

It should be noted that S303 has no sequence relationship with S301 and S302, and S301, S302 and S303 may be performed in sequence, and may also be performed at the same time, or S303 may be performed first, and then S301 and S302 is performed.

S303: The UGW-C determines a charging policy of the access user according to gateway configuration or information of the access user.

S304: The UGW-C sends an identifier to the selected second gateway role of the UGW-U, where the identifier is an identifier corresponding to a charging policy in a first preset charging policy, and the first preset charging policy is set in the first sub-gateway.

It should be noted that, as shown in Table 2, before the UGW-C sends the identifier to the UGW-U, a preset charging policy is configured in the UGW-C and the UGW-U, where a first preset charging policy is set in the UGW-C and a second preset charging policy is set in the UGW-U, the relationship between the first preset charging policy and the second preset charging policy has been described in the foregoing embodiment, so details are not described herein again. Further, the first preset charging policy and the second preset charging policy set an identifier corresponding to a charging policy in the preset charging policy according to a common agreement. The charging policy may be individually managed on the UGW-C and the UGW-U, that is, the charging policy may be merely traffic or call duration; and may also be combined with a control policy such as QoS, that is, the charging policy may be different traffics according to the current quality of service such as bandwidth and delay. The set identifier may be an ID (Identifier, identifier) value, an ID name or other information signs corresponding to the charging policy in the preset charging policy.

**Table 2**

| Charging Policy | Identifier |
|---|---|
| Call duration under roaming charging | 1000 |
| Traffic volume when the bandwidth is 2M | 1001 |
| Call duration of free incoming calls | 1010 |

Further, the identifier may also be identities corresponding to different charging policies in context stored in the access user, a bearer and service information, for the UGW-C to search for a charging policy. Herein, a situation that the identifier is a corresponding binary code of a charging policy in the first preset charging policy is taken as an example for illustration, and when the identifier is a context identifier or an entry identifier, the charging policy may also be searched for according to mapping, which, however, does not serve as a limitation.

Preferably, when the UGW-C needs to update control information such as the Qos or charging, the UGW-C may select a new identifier corresponding to the updated charging policy that needs to be measured, and sends the new identifier to the UGW-U, so that the UGW-U updates measurement according to the new identifier.

S305: The UGW-U receives the identifier sent by the UGW-C.

It should be noted that, because the charging policy in the first preset charging policy and the charging policy in the second preset charging policy correspond to the same identifier, the identifier is the identifier corresponding to the charging policy in the first preset charging policy, the UGW-U may search the second preset charging policy such as Table 2 for a desired charging policy according to the identifier, and measure and collect charging information. For example, when the identifier is "1001 ", the UGW-U measures the traffic volume when the bandwidth is 2M. Further, if the identifier is a context identifier, the UGW-U searches a context to measure charging information.

S306: The UGW-U searches the second preset charging policy for a charging policy according to the identifier, and collects charging information of the access user according to the charging policy.

For example, as shown in Table 2, if the identifier "1001", the UGW-U measures the traffic volume, and if the identifier is "1010" or "1000", the UGW-U measures the call duration; a difference is that, if the identifier "1010", the UGW-U measures the call duration of free calls, and if the identifier is "1000", the UGW-U measures the call duration under roaming charging.

It should be noted that, the charging information collected by the UGW-U according to the charging policy indicated by the first message is charging or not collecting the charging information. When the first role of the UGW-C is an SGW, and the UGW-C is connected to a PGW through an S5 interface, the UGW-C may determine that the UGW-U performs no-charging processing, where the first message may indicate that the charging policy of the access user is not performing charging, or the first message may not indicate a charging policy, and the UGW-U does not collect charging information according to the charging policy indicated by the first message; and if the first role of the UGW-C is an SGW, and the UGW-C is connected to a PGW through an S8 interface, the UGW-C may determine that the UGW-U performs roaming charging, and the UGW-U collects charging information according to the charging policy indicated by the first message. Further, according to provisions on the S5 interface and the S8 interface in the 3GPP protocol, when the UGW-C is connected to a PGW through an S5 interface, charging may not be performed, and when the UGW-C is connected to a PGW through an S8 interface, roaming charging is performed, so that the UGW-C can determine to charge or not to charge, so as to send a first message to indicate the UGW-C of collecting or not collecting charging information, but the present invention is not limited this determination method.

Preferably, when the UGW-C needs to update the control information such as the QoS or charging, the UGW-C may select a new identifier corresponding to the updated charging policy, and send the new identifier to the UGW-U; and the UGW-U receives the new identifier, and updates the measured charging information according to a charging measure corresponding to the new identifier.

S307: If the UGW-U determines that a value of the charging information is greater than a preset threshold, the UGW-U sends a second message to the UGW-C, where the second information carries the charging information.

For example, the preset threshold may be a measured traffic reaching 60M, and may also be call duration exceeding 120min. For example, when the charging information is 60.1M, the UGW-U sends a second message carrying a traffic volume of 60.1M to the UGW-C. Setting the preset threshold can reduce the number of times that the UGW-U sends the second message to the UGW-C, so as to reduce information exchange between the UGW-U and UGW-C, thereby lowering a load of charging processing.

Further, if the UGW-U does not collect charging information, the UGW-U may send a second message not carrying charging information to the UGW-C, so as to notify the UGW-C that charging information of the access user is not collected; or the UGW-U does not send a second message to the UGW-C.

S308: The UGW-C receives the second message sent by the UGW-U.

It should be noted that, the UGW-C collects charging information according to the received second message and processes the charging information. For example, the second message includes the identifier and charging information sent to the UGW-U by the UGW-C, the UGW-C searches the first preset charging policy by using the identifier as an index, and fills the found charging policy information in the context; and when the UGW-C needs to generate a CDR record, a charging unit of the UGW-C reads information in the context, and generates a CDR. Further, if the identifier is an identifier indicating a context corresponding to the charging policy, the UGW-C searches context by using the identifier as an index, and fills the charging policy information in the context, and when the UGW-C needs to generate a CDR record, a charging unit of the UGW-C reads information in the context, and generates a CDR.

It should be noted that, the identifier and the second message may carry a matching value, and the matching value may indicate a matching position corresponding to the charging policy, so that the UGW-C and the UGW-U obtain user information, and the UGW-C and the UGW-U know to perform control and data forwarding on the same user; or, the identifier and the second message may carry a user ID, so that the UGW-C and the UGW-U obtain user information, and the UGW-C and the UGW-U know to perform control and data forwarding on the same user.

According to the gateway charging method provided by the embodiment of the present invention, the UGW-C determines a charging policy of an access user, and sends a first message indicating the charging policy to the UGW-U; the UGW-U receives the first message, and then collects charging information according to the first message, and sends a second message carrying the charging information to the UGW-C; and the UGW-C receives the second message. In this way, the UGW-C can merely process the charging information and control the UGW-U, while the UGW-U can merely measure data and send a measurement result. Messages indicating required charging information and carrying the collected charging information are sent between the UGW-C and the UGW-U, so that multiple contents such as charging condition information and charging control information does not need to be transferred, thereby lowering transmission amount of charging information between two sub-gateway interfaces.

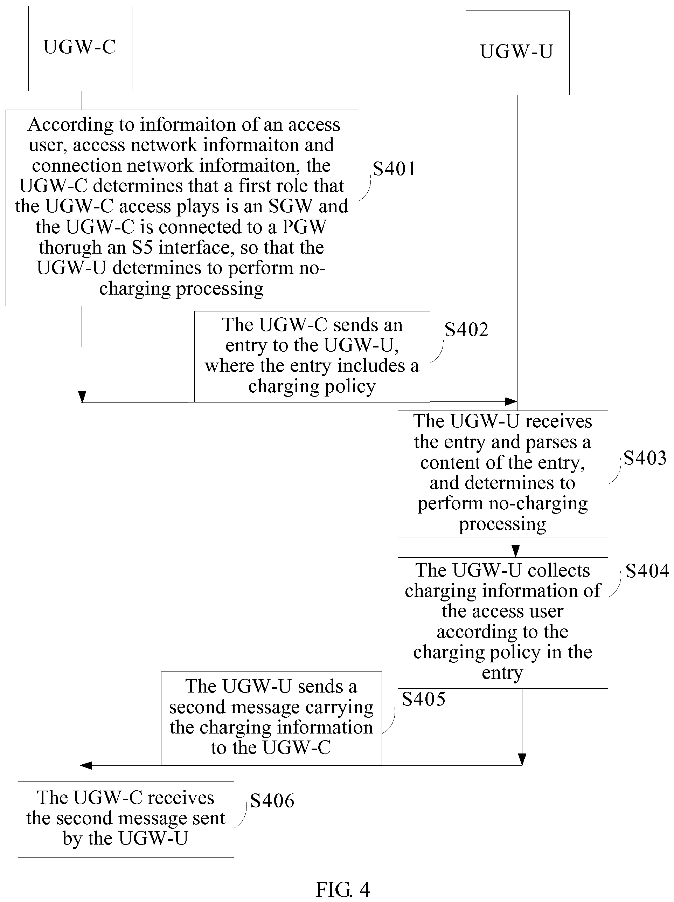

According to a gateway charging method provided by another embodiment of the present invention, as shown in FIG. 4, in this embodiment, a situation that a first sub-gateway is a UGW-C, and a second sub-gateway is a UGW-U is taken as an example, which, however, does not serve as a limitation, and the method includes:
S401: According to information of an access user, access network information and connection network information, the UGW-C determines that a first role that the UGW-C access plays is an SGW and the UGW-C is connected to a PGW through an S5 interface, so that the UGW-U determines to perform no-charging processing.

According to information of an access user, access network information and connection network information, the UGW-C determines that the first role that the UGW-C access plays may also be an PGW or a GGSN, and in this embodiment, merely a situation that when the first role that the UGW-C plays is an SGW, and the UGW-C is connected to a PGW through an S5 interface, the UGW-C determines that the UGW-U does not collect charging information of the access user is taken as an example for illustration, and situations that the UGW-U determines, according to other manners, to not collect charging information of the access user, for example, determines, according to the received first message, to not collect the charging information of the access user, all fall within the protection scope of the present invention, and the present invention is not limited to the scenario illustrated in this embodiment.

S402: The UGW-C sends an entry to the UGW-U, where the entry includes a charging policy.

It should be noted that, because the UGW-U performs no-charging processing, the sent entry may be

| | |
|---|---|
| Access user | |

or,

| | |
|---|---|
| Access user | Call duration |

In this way, the UGW-U can determine the charging policy according to the received entry, so as to obtain charging information according to the charging policy, for example, collect the call duration of the access user.

S403: The UGW-U receives the entry and parses a content of the entry, and determines to perform no-charging processing.

It should be noted that, performing no-charging processing may include measuring charging information of no-charging, for example, measuring free call duration, and performing no-charging processing may be not performing processing, that is, not measuring free calls or free network traffic of the access user.

S404: The UGW-U collects charging information of the access user according to the charging policy in the entry.

For example, the UGW-U measures the call duration such as local free incoming call according to the charging policy of no-charging processing in the entry. The charging policy is measuring local incoming call duration, and the UGW-U determines to perform no-charging processing, according to that the first role that the UGW-C plays is an SGW and the UGW-C is connected to a PGW through an S5 interface; or the UGW-U determines to perform no-charging processing, according to that the charging policy in the entry is empty; or the UGW-U determines to perform no-charging processing, according to that the charging policy is no-charging. The UGW-U sends a second message to the UGW-C.

S405: The UGW-U sends a second message carrying the charging information to the UGW-C.

For example, if the UGW-U measures the charging information of no-charging, the second message carries the measurement result; and if the UGW-U does not perform processing on the charging information of no-charging, the second message may be a response message, which merely notifies the UGW-C that the UGW-U has received the entry but does not measure the charging formation; or the UGW-U may not send a second message.

S406: The UGW-C receives the second message sent by the UGW-U.

It should be noted that, if the second message received by the UGW-C is a response message and does not carry the charging information, the UGW-C performs processing according to that the charging information is zero; if the second message received by the UGW-C carries the charging information and the charging information is 0, the UGW-C performs processing with the charging information being 0 as a charging result; and if the UGW-C does not receive the second message, the UGW-C still performs processing according to that the charging information is 0. However, because the UGW-C does not receive the second message, the UGW-C cannot determine whether the UGW-U does not send the second message or the UGW-U does not sent the second message in time, so the UGW-C generally does not process a no-charging situation according to that the second message is not sent. The method for the UGW-C to process the second message has been described in the foregoing embodiment, so details are not described herein again

According to the gateway charging method provided by the embodiment of the present invention, the UGW-C determines a charging policy of an access user, and sends a first message indicating the charging policy to the UGW-U; the UGW-U receives the first message, and then collects charging information according to the first message, and sends a second message carrying the charging information to the UGW-C; and the UGW-C receives the second message. In this way, the UGW-C can merely process the charging information and control the UGW-U, while the UGW-U can merely measure data and send a measurement result. Messages indicating required charging information and carrying the collected charging information are sent between the UGW-C and the UGW-U, so that multiple contents such as charging condition information and charging control information does not need to be transferred, thereby lowering transmission amount of charging information between two sub-gateway interfaces.

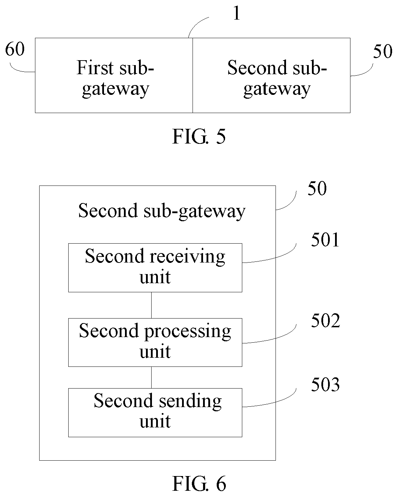

As shown in FIG. 5, a gateway 1 provided by an embodiment of the present invention includes a first sub-gateway 60 and a second sub-gateway 50. As shown in FIG. 6, the second sub-gateway 50 includes:
A second receiving unit 501 is configured to collect charging information of an access user according to a charging policy indicated by a first message.

It should be noted that, the first message may be an identifier indicating a charging policy that needs to be measured and corresponds to the access user in a preset charging policy, and may also be an entry including the access user and charging formation that needs to be measured and corresponds to the access user.

A second processing unit 502 is configured to collect charging information of the access user according to the charging policy indicated by the first message received by the second receiving unit 501.

For example, if the second receiving unit 501 receives the first message sent by the first sub-gateway 60, and the first message is an identifier corresponding to a charging policy in a first preset charging policy, where the first preset charging policy is set in the first sub-gateway 60, the second processing unit 502 may search a second preset charging policy for a charging policy according to the identifier received by the second receiving unit 501, and collect the charging information of the access user according to the charging policy, where the second preset charging policy is set in the second sub-gateway 50, and the charging policy in the first preset charging policy and the charging policy in the second preset charging policy correspond to the same identifier.

Alternatively, if the second receiving unit 501 receives the first message sent by the first sub-gateway 60, and the first message is an entry including a charging policy, the second processing unit 502 may collect the charging information of the access user according to the charging policy in the entry.

Alternatively, if the first message received by the second receiving unit 501 indicates that the charging policy of the access user is not performing charging or the first message received by the second receiving unit 501 does not indicating a charging policy, the second processing unit 502 does not collect the charging information of the access user.

A second sending unit 503 is configured to send a second message to the first sub-gateway 60, where the second information carries the charging information collected by the second processing unit 502.

Further, if the second processing unit 502 determines that a value of the collected charging information is greater than a preset threshold, the second sending unit 503 sends the second message to the first sub-gateway 60, where the second information carries the charging information.

The second sub-gateway 50 may work by adopting the method provided by the foregoing embodiment, and the working method is the same as that provided in the embodiment, so details are not described herein again.

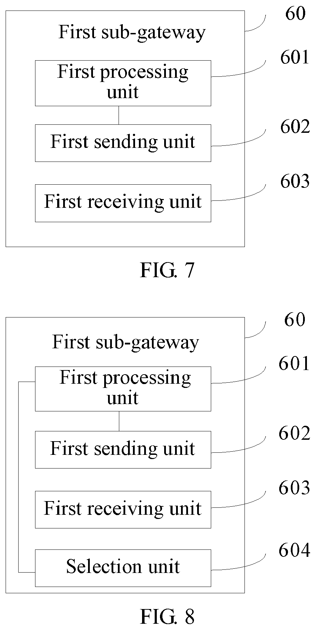

As shown in FIG. 7, the first sub-gateway 60 includes:
A first processing unit 601 is configured to determine a charging policy of an access user according to gateway configuration or information of the access user.

It should be noted that, the first sub-gateway 60 statically configures a charging policy corresponding to a user, a bearer and a service on the gateway 1 according to gateway configuration; or when a user and a service are activated, the first sub-gateway 60 obtains information of the access user in real time and determines the charging policy of the access user.

A first sending unit 602 is configured to send a first message to the second sub-gateway 50, where the first message indicates the charging policy determined by the first processing unit 601, so that the second sub-gateway 50 collects charging information according to the charging policy.

For example, the first sending unit 602 sends a first message to the second sub-gateway 50, where the first message is an identifier corresponding to a charging policy in a first preset charging policy, and the first preset charging policy is set in the first sub-gateway 60; or, the first sending unit 602 sends a first message to the second sub-gateway 50, where the first message is an entry including a charging policy.

A first receiving unit 603 is configured to receive a second message sent by the second sub-gateway 50, where the second information carries charging information.

Further, as shown in FIG. 8, the first sub-gateway 60 further includes the following unit:
A selection unit 604 is configured to, after according to user information of the access user, access network information and connection network information, the first processing unit 601 determines that the first sub-gateway 60 plays a first gateway role, select a second gateway role of the second sub-gateway 50 corresponding to the first gateway role determined by the first processing unit 601, so that the sending unit 602 sends a first message to the second gateway role of the second sub-gateway 50.

Further, if the first processing unit 601 determines that charging processing is not performed under the first gateway role and the second gateway role selected by the selection unit 604, the first message sent by the first sending unit 602 indicates that the charging policy of the access user is not performing charging, or the first message sent by the first sending unit 602 does not indicate a charging policy.

According to the gateway 1 provided by the embodiment of the present invention, the first sub-gateway 60 determines a charging policy of an access user, and sends a first message indicating the charging policy to the second sub-gateway 50; the second sub-gateway 50 receives the first message, and then collects charging information according to the first message, and sends a second message carrying the charging information to the first sub-gateway 60; and the first sub-gateway 60 receives the second message. In this way, the first sub-gateway 60 can merely process the charging information and control the second sub-gateway 50, while the second sub-gateway 50 can merely measure data and send a measurement result. Messages indicating required charging information and carrying the collected charging information are sent between the first sub-gateway 60 and the second sub-gateway 50, so that multiple contents such as charging condition information and charging control information does not need to be transferred, thereby lowering transmission amount of charging information between two sub-gateway interfaces.

## Claims

1. A gateway charging method, wherein a gateway is divided into a first sub-gateway and a second sub-gateway, the first sub-gateway is configured to process a charging policy and control the second sub-gateway, and the second sub-gateway is configured to forward data and collect charging information, and the method comprises:
receiving (S101), by the second sub-gateway, a first message sent by the first sub-gateway, wherein the first message is an identifier corresponding to a charging policy of an access user in a first preset charging policy, and the first preset charging policy is set in the first sub-gateway;
searching (S102), by the second sub-gateway, a second preset charging policy for the charging policy according to the identifier, and collecting the charging information of the access user according to the second preset charging policy, wherein the second preset charging policy is set in the second sub-gateway, the charging policy in the first preset charging policy and the charging policy in the second preset charging policy correspond to the same identifier; and
sending (S103), by the second sub-gateway, a second message to the first sub-gateway, wherein the second message carries the charging information.

2. The method according to claim 1, wherein the sending, by the second sub-gateway, a second message to the first sub-gateway, wherein the second message carries the charging information comprises:
if the second sub-gateway determines that a value of the charging information is greater than a preset threshold, sending, by the second sub-gateway, the second message to the first sub-gateway, wherein the second message carries the charging information.

3. A gateway charging method, wherein a gateway is divided into a first sub-gateway and a second sub-gateway, the first sub-gateway is configured to process a charging policy and control the second sub-gateway, and the second sub-gateway is configured to forward data and collect charging information, and the method comprises:
determining (S201), by the first sub-gateway, a charging policy of an access user according to gateway configuration or information of the access user;
sending (S202), by the first sub-gateway, a first message to the second sub-gateway, wherein the first message is an identifier corresponding to the charging policy in a first preset charging policy, and the first preset charging policy is set in the first sub-gateway; and
receiving (S203), by the first sub-gateway, a second message sent by the second sub-gateway, wherein the second message carries the charging information, the charging information being collected according to a second preset charging policy set in the second sub-gateway, the charging policy in the first preset charging policy and the charging policy in the second preset charging policy corresponding to the same identifier.

4. The method according to claim 3, before the sending, by the first sub-gateway, a first message indicating the charging policy of the access user to the second sub-gateway, further comprising:
according to user information of the access user, access network information and connection network information, determining, by the first sub-gateway, that the first sub-gateway plays a first gateway role.

5. A gateway, wherein the gateway is divided into a first sub-gateway and a second sub-gateway, the first sub-gateway is configured to process a charging policy and control the second sub-gateway, the second sub-gateway is configured to forward data and collect charging information, and the second sub-gateway comprises:
a second receiving unit (501), configured to receive the first message sent by the first sub-gateway, wherein the first message is an identifier corresponding to the charging policy in a first preset charging policy, and the first preset charging policy is set in the first sub-gateway;
a second processing unit (502), configured to search a second preset charging policy for the charging policy according to the identifier received by the second receiving unit, and collect the charging information of the access user according to the second preset charging policy, wherein the second preset charging policy is set in the second sub-gateway, and the charging policy in the first preset charging policy and the charging policy in the second preset charging policy correspond to the same identifier; and
a second sending unit (503), configured to send a second message to the first sub-gateway, wherein the second message carries the charging information collected by the second processing unit.

6. The gateway according to claim 5, wherein
if the second processing unit (502) determines that a value of the collected charging information is greater than a preset threshold, the second sending unit (503) sends the second message to the first sub-gateway, wherein the second message carries the charging information.

7. A gateway, wherein the gateway is divided into a first sub-gateway and a second sub-gateway, the first sub-gateway is configured to process a charging policy and control the second sub-gateway, the second sub-gateway is configured to forward data and collect charging information, and the first sub-gateway comprises:
a first processing unit (601), configured to determine a charging policy of an access user according to gateway configuration or information of the access user;
a first sending unit (602), configured to send a first message to the second sub-gateway, wherein the first message is an identifier corresponding to the charging policy in a first preset charging policy, and the first preset charging policy is set in the first sub-gateway; and
a first receiving unit (603), configured to receive a second message sent by the second sub-gateway, wherein the second message carries the charging information, the charging information being collected according to a second preset charging policy set in the second sub-gateway, the charging policy in the first preset charging policy and the charging policy in the second preset charging policy corresponding to the same identifier.

8. The gateway according to claim 7, wherein
the first processing unit (601) is further configured to, according to user information of the access user, access network information and connection network information, determine that the first sub-gateway plays a first gateway role.

## Patentansprüche

1. Gateway-Abrechnungsverfahren, wobei ein Gateway in ein erstes Sub-Gateway und ein zweites Sub-Gateway aufgeteilt ist, wobei das erste Sub-Gateway konfiguriert ist, eine Abrechnungs-Richtlinie zu verarbeiten und das zweite Sub-Gateway zu steuern, und das zweite Sub-Gateway konfiguriert ist, Daten weiterzuleiten und Abrechnungs-Informationen zu sammeln, und das Verfahren aufweist:
Empfangen (S101), durch das zweite Sub-Gateway, einer von dem ersten Sub-Gateway gesendeten ersten Nachricht, wobei die erste Nachricht eine Kennung ist, die einer Abrechnungs-Richtlinie eines Zugangsnutzers in einer ersten voreingestellten Abrechnungs-Richtlinie entspricht, und die erste voreingestellte Abrechnungs-Richtlinie in dem ersten Sub-Gateway eingestellt wird;
Suchen (S102), durch das zweite Sub-Gateway, einer zweiten voreingestellten Abrechnungs-Richtlinie für die Abrechnungs-Richtlinie gemäß der Kennung, und Sammeln der Abrechnungs-Informationen des Zugangsnutzers gemäß der zweiten voreingestellten Abrechnungs-Richtlinie, wobei die zweite voreingestellte Abrechnungs-Richtlinie in dem zweiten Sub-Gateway eingestellt wird, wobei die Abrechnungs-Richtlinie in der ersten voreingestellten Abrechnungs-Richtlinie und die Abrechnungs-Richtlinie in der zweiten voreingestellten Abrechnungs-Richtlinie der gleichen Kennung entsprechen; und
Senden (S103), durch das zweite Sub-Gateway, einer zweiten Nachricht an das erste Sub-Gateway, wobei die zweite Nachricht die Abrechnungs-Informationen trägt.

2. Verfahren nach Anspruch 1, wobei das Senden, durch das zweite Sub-Gateway, einer zweiten Nachricht an das erste Sub-Gateway, wobei die zweite Nachricht die Abrechnungs-Informationen trägt, aufweist:
wenn das zweite Sub-Gateway bestimmt, dass ein Wert der Abrechnungs-Informationen größer als ein voreingestellter Schwellenwert ist, Senden, durch das zweite Sub-Gateway, der zweiten Nachricht an das erste Sub-Gateway, wobei die zweite Nachricht die Abrechnungs-Informationen trägt.

3. Gateway-Abrechnungsverfahren, wobei ein Gateway in ein erstes Sub-Gateway und ein zweites Sub-Gateway aufgeteilt ist, wobei das erste Sub-Gateway konfiguriert ist, eine Abrechnungs-Richtlinie zu verarbeiten und das zweite Sub-Gateway zu steuern, und das zweite Sub-Gateway konfiguriert ist, Daten weiterzuleiten und Abrechnungs-Informationen zu sammeln, und das Verfahren aufweist:
Bestimmen (S201), durch das erste Sub-Gateway, einer Abrechnungs-Richtlinie eines Zugangsnutzers gemäß einer Gateway-Konfiguration oder Informationen des Zugangsnutzers;
Senden (S202), durch das erste Sub-Gateway, einer ersten Nachricht an das zweite Sub-Gateway, wobei die erste Nachricht eine Kennung ist, die der Abrechnungs-Richtlinie in einer ersten voreingestellten Abrechnungs-Richtlinie entspricht, und die erste voreingestellte Abrechnungs-Richtlinie in dem ersten Sub-Gateway eingestellt wird; und
Empfangen (S203), durch das erste Sub-Gateway, einer von dem zweiten Sub-Gateway gesendeten zweiten Nachricht, wobei die zweite Nachricht die Abrechnungs-Informationen trägt, wobei die Abrechnungs-Informationen gemäß einer in dem zweiten Sub-Gateway eingestellten zweiten voreingestellten Abrechnungs-Richtlinie gesammelt werden, wobei die Abrechnungs-Richtlinie in der ersten voreingestellten Abrechnungs-Richtlinie und die Abrechnungs-Richtlinie in der zweiten voreingestellten Abrechnungs-Richtlinie der gleichen Kennung entsprechen.

4. Verfahren nach Anspruch 3, vor dem Senden, durch das erste Sub-Gateway, einer ersten Nachricht, die die Abrechnungs-Richtlinie des Zugangsnutzers angibt, an das zweite Sub-Gateway, ferner aufweisend:
gemäß Benutzerinformationen des Zugangsnutzers, Zugangsnetzinformationen und Verbindungsnetzinformationen, Bestimmen, durch das erste Sub-Gateway, dass das erste Sub-Gateway eine erste Gateway-Rolle spielt.

5. Gateway, wobei das Gateway in ein erstes Sub-Gateway und ein zweites Sub-Gateway aufgeteilt ist, wobei das erste Sub-Gateway konfiguriert ist, eine Abrechnungs-Richtlinie zu verarbeiten und das zweite Sub-Gateway zu steuern, wobei das zweite Sub-Gateway konfiguriert ist, Daten weiterzuleiten und Abrechnungs-Informationen zu sammeln, und das zweite Sub-Gateway aufweist:
eine zweite Empfangseinheit (501), die konfiguriert ist, die von dem ersten Sub-Gateway gesendete erste Nachricht zu empfangen, wobei die erste Nachricht eine Kennung ist, die der Abrechnungs-Richtlinie in einer ersten voreingestellten Abrechnungs-Richtlinie entspricht, und die erste voreingestellte Abrechnungs-Richtlinie in dem ersten Sub-Gateway eingestellt ist;
eine zweite Verarbeitungseinheit (502), die konfiguriert ist, eine zweite voreingestellte Abrechnungs-Richtlinie für die Abrechnungs-Richtlinie gemäß der von der zweiten Empfangseinheit empfangenen Kennung zu suchen, und die Abrechnungs-Informationen des Zugangsnutzers gemäß der zweiten voreingestellten Abrechnungs-Richtlinie zu sammeln, wobei die zweite voreingestellte Abrechnungs-Richtlinie in dem zweiten Sub-Gateway eingestellt ist, und die Abrechnungs-Richtlinie in der ersten voreingestellten Abrechnungs-Richtlinie und die Abrechnungs-Richtlinie in der zweiten voreingestellten Abrechnungs-Richtlinie der gleichen Kennung entsprechen; und
eine zweite Sendeeinheit (503), die konfiguriert ist, eine zweite Nachricht an das erste Sub-Gateway zu senden, wobei die zweite Nachricht die von der zweiten Verarbeitungseinheit gesammelten Abrechnungs-Informationen trägt.

6. Gateway nach Anspruch 5, wobei
wenn die zweite Verarbeitungseinheit (502) bestimmt, dass ein Wert der gesammelten Abrechnungs-Informationen größer als ein voreingestellter Schwellenwert ist, die zweite Sendeeinheit (503) die zweite Nachricht an das erste Sub-Gateway sendet, wobei die zweite Nachricht die Abrechnungs-Informationen trägt.

7. Gateway, wobei das Gateway in ein erstes Sub-Gateway und ein zweites Sub-Gateway aufgeteilt ist, wobei das erste Sub-Gateway konfiguriert ist, eine Abrechnungs-Richtlinie zu verarbeiten und das zweite Sub-Gateway zu steuern, wobei das zweite Sub-Gateway konfiguriert ist, Daten weiterzuleiten und Abrechnungs-Informationen zu sammeln, und das erste Sub-Gateway aufweist:
eine erste Verarbeitungseinheit (601), die konfiguriert ist, eine Abrechnungs-Richtlinie eines Zugangsnutzers gemäß einer Gateway-Konfiguration oder Informationen des Zugangsnutzers zu bestimmen;
eine erste Sendeeinheit (602), die konfiguriert ist, eine erste Nachricht an das zweite Sub-Gateway zu senden, wobei die erste Nachricht eine Kennung ist, die der Abrechnungs-Richtlinie in einer ersten voreingestellten Abrechnungs-Richtlinie entspricht, und die erste voreingestellte Abrechnungs-Richtlinie in dem ersten Sub-Gateway eingestellt ist; und
eine erste Empfangseinheit (603), die konfiguriert ist, eine durch das zweite Sub-Gateway gesendete zweite Nachricht zu empfangen, wobei die zweite Nachricht die Abrechnungs-Informationen trägt, wobei die Abrechnungs-Informationen gemäß einer zweiten voreingestellten Abrechnungs-Richtlinie gesammelt werden, die in dem zweiten Sub-Gateway eingestellt ist, wobei die Abrechnungs-Richtlinie in der ersten voreingestellten Abrechnungs-Richtlinie und die Abrechnungs-Richtlinie in der zweiten voreingestellten Abrechnungs-Richtlinie der gleichen Kennung entsprechen.

8. Gateway nach Anspruch 7, wobei
die erste Verarbeitungseinheit (601) ferner konfiguriert ist, gemäß Benutzerinformationen des Zugangsnutzers, Zugangsnetzinformationen und Verbindungsnetzinformationen zu bestimmen, dass das erste Sub-Gateway eine erste Gateway-Rolle spielt.

## Revendications

1. Procédé de facturation de passerelle, dans lequel une passerelle est divisée en une première sous-passerelle et une seconde sous-passerelle, la première sous-passerelle est configurée pour traiter une politique de facturation et pour commander la seconde sous-passerelle et la seconde sous-passerelle est configurée pour transmettre des données et pour collecter des informations de facturation, et le procédé consiste :
à recevoir (S101), au moyen de la seconde sous-passerelle, un premier message envoyé par la première sous-passerelle, dans lequel le premier message est un identifiant correspondant à une politique de facturation d'un utilisateur d'accès dans une première politique de facturation prédéfinie et la première politique de facturation prédéfinie est définie dans la première sous-passerelle ;
à rechercher (S102), au moyen de la seconde sous-passerelle, une seconde politique de facturation prédéfinie pour la politique de facturation en fonction de l'identifiant et à collecter les informations de facturation de l'utilisateur d'accès en fonction de la seconde politique de facturation prédéfinie, dans lequel la seconde politique de facturation prédéfinie est définie dans la seconde sous-passerelle, la politique de facturation dans la première politique de facturation prédéfinie et la politique de facturation dans la seconde politique de facturation prédéfinie correspondent au même identifiant ; et
à envoyer (S103), au moyen de la seconde sous-passerelle, un second message à la première sous-passerelle, dans lequel le second message comporte les informations de facturation.

2. Procédé selon la revendication 1, dans lequel l'envoi, par la seconde sous-passerelle, d'un second message à la première sous-passerelle, dans lequel le second message comporte les informations de facturation, consiste :
si la seconde sous-passerelle détermine qu'une valeur des informations de facturation est supérieure à un seuil prédéfini, à envoyer, au moyen de la seconde sous-passerelle, le second message à la première sous-passerelle, dans lequel le second message comporte les informations de facturation.

3. Procédé de facturation de passerelle, dans lequel une passerelle est divisée en une première sous-passerelle et une seconde sous-passerelle, la première sous-passerelle est configurée pour traiter une politique de facturation et pour commander la seconde sous-passerelle et la seconde sous-passerelle est configurée pour transmettre des données et pour collecter des informations de facturation, et le procédé consiste :
à déterminer (S201), au moyen de la première sous-passerelle, une politique de facturation d'un utilisateur d'accès en fonction d'une configuration de passerelle ou d'informations de l'utilisateur d'accès ;
à envoyer (S202), au moyen de la première sous-passerelle, un premier message à la seconde sous-passerelle, dans lequel le premier message est un identifiant correspondant à la politique de facturation dans une première politique de facturation prédéfinie et la première politique de facturation prédéfinie est définie dans la première sous-passerelle ; et
à recevoir (S203), au moyen de la première sous-passerelle, un second message envoyé par la seconde sous-passerelle, dans lequel le second message comporte les informations de facturation, les informations de facturation étant collectées en fonction d'une seconde politique de facturation prédéfinie définie dans la seconde sous-passerelle, la politique de facturation dans la première politique de facturation prédéfinie et la politique de facturation dans la seconde politique de facturation prédéfinie correspondant au même identifiant.

4. Procédé selon la revendication 3, avant l'envoi, par la première sous-passerelle, d'un premier message indiquant la politique de facturation de l'utilisateur d'accès à la seconde sous-passerelle, consistant en outre :
en fonction d'informations d'utilisateur de l'utilisateur d'accès, à avoir accès à des informations de réseau et à des informations de réseau de connexion, à déterminer, au moyen de la première sous-passerelle, que la première sous-passerelle joue un premier rôle de passerelle.

5. Passerelle, dans laquelle la passerelle est divisée en une première sous-passerelle et une seconde sous-passerelle, la première sous-passerelle est configurée pour traiter une politique de facturation et pour commander la seconde sous-passerelle, la seconde sous-passerelle est configurée pour transmettre des données et pour collecter des informations de facturation, et la seconde sous-passerelle comprend :
une seconde unité de réception (501), configurée pour recevoir le premier message envoyé par la première sous-passerelle, dans laquelle le premier message est un identifiant correspondant à la politique de facturation dans une première politique de facturation prédéfinie et la première politique de facturation prédéfinie est définie dans la première sous-passerelle ;
une seconde unité de traitement (502), configurée pour rechercher une seconde politique de facturation prédéfinie pour la politique de facturation en fonction de l'identifiant reçu par la seconde unité de réception et pour collecter les informations de facturation de l'utilisateur d'accès en fonction de la seconde politique de facturation prédéfinie, dans laquelle la seconde politique de facturation prédéfinie est définie dans la seconde sous-passerelle, et la politique de facturation dans la première politique de facturation prédéfinie et la politique de facturation dans la seconde politique de facturation prédéfinie correspondent au même identifiant ; et
une seconde unité d'envoi (503), configurée pour envoyer un second message à la première sous-passerelle, dans laquelle le second message comporte les informations de facturation collectées par la seconde unité de traitement.

6. Passerelle selon la revendication 5, dans laquelle
si la seconde unité de traitement (502) détermine qu'une valeur des informations de facturation collectées est supérieure à un seuil prédéfini, la seconde unité d'envoi (503) envoie le second message à la première sous-passerelle, dans laquelle le second message comporte les informations de facturation.

7. Passerelle, dans laquelle la passerelle est divisée en une première sous-passerelle et une seconde sous-passerelle, la première sous-passerelle est configurée pour traiter une politique de facturation et pour commander la seconde sous-passerelle, la seconde sous-passerelle est configurée pour transmettre des données et pour collecter des informations de facturation, et la première sous-passerelle comprend :
une première unité de traitement (601), configurée pour déterminer une politique de facturation d'un utilisateur d'accès en fonction d'une configuration de passerelle ou d'informations de l'utilisateur d'accès ;
une première unité d'envoi (602), configurée pour envoyer un premier message à la seconde sous-passerelle, dans laquelle le premier message est un identifiant correspondant à la politique de facturation dans une première politique de facturation prédéfinie et la première politique de facturation prédéfinie est définie dans la première sous-passerelle ; et
une première unité de réception (603), configurée pour recevoir un second message envoyé par la seconde sous-passerelle, dans laquelle le second message comporte les informations de facturation, les informations de facturation étant collectées en fonction d'une seconde politique de facturation prédéfinie définie dans la seconde sous-passerelle, la politique de facturation dans la première politique de facturation prédéfinie et la politique de facturation dans la seconde politique de facturation prédéfinie correspondant au même identifiant.

8. Passerelle selon la revendication 7, dans laquelle
la première unité de traitement (601) est en outre configurée, en fonction d'informations d'utilisateur de l'utilisateur d'accès, pour avoir accès à des informations de réseau et à des informations de réseau de connexion, pour déterminer que la première sous-passerelle joue un premier rôle de passerelle.
